# EUROPEAN PATENT APPLICATION

(11) **EP 2 589 908 A2**
(43) Date of publication of application: **08.05.2013**
(21) Application number: 12190833.9
(22) Date of filing: 31.10.2012
(51) Int. Cl.: F25J 3/06, F25J 3/04, B01D 53/00

(54) **Purification of carbon dioxide**

(30) Priority: 04.11.2011 US 201113289363
(71) Applicant: AIR PRODUCTS AND CHEMICALS, INC., Allentown, PA 18195-1501 (US)
(72) Inventor: Higginbotham, Paul, Guildford, Surrey GU1 3QG (GB)
(74) Representative: Stones, James Alexander

(57) **Abstract**

Refrigeration duty in a carbon dioxide purification unit (CPU) operating at elevated pressure and sub-ambient temperature can be provided in at least a first part by indirect heat exchange (162) against at least latent heat of at least one liquid first refrigerant (116,132), preferably carbon dioxide liquid(s) produced in the CPU, thereby typically evaporating the liquid(s), and a second part by indirect heat exchange with sensible heat energy alone of a second refrigerant (206). The second refrigerant may be nitrogen gas imported from an integrated cryogenic air separation unit (ASU) or carbon dioxide liquid exported from the CPU, cooled and returned to the CPU. One advantage is that total power consumption of the CPU and an integrated ASU is reduced.

## Description

The present invention relates to a method of purifying crude carbon dioxide gas using a low temperature carbon dioxide purification process. Specifically, the present invention resides in the manner in which the refrigeration duty for such a method may be provided in order to reduce overall energy consumption. The present invention has particular application in processes that capture carbon dioxide from flue gas produced in an oxyfuel combustion process to raise steam for electric power generation, in which oxygen for the combustion is produced in a cryogenic air separation unit (ASU).

It has been asserted that one of the main causes of global warming is the rise in greenhouse gas contamination in the atmosphere due to anthropological effects. The main greenhouse gas which is being emitted, carbon dioxide (CO₂), has risen in concentration in the atmosphere from 270 ppm before the industrial revolution to the current figure of about 378 ppm. Further rises in CO₂ concentration are inevitable until CO₂ emissions are curbed. The main sources of CO₂ emission are fossil fuel fired electric power stations and from petroleum fuelled vehicles.

The use of fossil fuels is necessary in order to continue to produce the quantities of electric power that nations require to sustain their economies and lifestyles. There is, therefore, a need to devise efficient means by which CO₂ may be captured from power stations burning fossil fuel so that it can be stored rather than being vented into the atmosphere. Storage may be deep undersea; in a geological formation such as a saline aquifer; or a depleted oil or natural gas formation. Alternatively, the CO₂ could be used for enhanced oil recovery (EOR).

Oxyfuel combustion seeks to mitigate the harmful effects of CO₂ emissions by producing a net combustion product gas consisting of CO₂ and water vapour, by combusting fuels such as carbonaceous fuels, hydrocarbonaceous fuels and biomass, in an oxygen-rich (e.g. more than 20 wt %) atmosphere. An oxyfuel process for CO₂ capture from a pulverised coal-fired power boiler is described in a paper entitled *"*Oxy-combustion processes for CO2 capture from advanced supercritical PF and NGCC power plants" (Dillon et al; presented at GHGT-7, Vancouver, Sept 2004), the disclosure of which is incorporated herein by reference.

Oxygen for the combustion is typically supplied from an ASU. However, using pure oxygen for the combustion would result is a very high combustion temperature which would not be practical in a furnace or boiler. Therefore, in order to moderate the combustion temperature, part of the total flue gas generated in the combustion is recycled, usually after cooling, back to the burner. The net flue gas is then processed to produce carbon dioxide for storage or use.

Oxyfuel combustion produces raw flue gas containing primarily CO₂, together with contaminants such as water vapour; "non-condensable" gases, i.e. gases from chemical processes which are not easily condensed by cooling, such as excess combustion oxygen (O₂), and/or O₂, N₂ and argon (Ar) derived from any air leakage into the system; and acid gases such as SO₃, SO₂, hydrogen chloride (HCl), NO and NO₂ produced as oxidation products from components in the fuel or by combination of N₂ and O₂ at high temperature. The precise concentrations of the gaseous impurities present in the flue gas depend on factors such as on the fuel composition; the level of N₂ in the combustor; the combustion temperature; and the design of the burner and furnace.

Water and the acid gases are removed from the flue gas which is compressed to elevated pressure. The gas is then purified to produce pure carbon dioxide in a sub-ambient or low temperature carbon dioxide purification unit (CPU). The carbon dioxide may be purified by distillation or by partial condensation and phase separation.

In general, the final, purified, CO₂ product should ideally be produced as a high pressure fluid stream for delivery into a pipeline for transportation to storage or to site of use, e.g. in EOR. The CO₂ must be dry to avoid corrosion of, for example, a carbon steel pipeline. The CO₂ impurity levels must not jeopardise the integrity of the geological storage site, particularly if the CO₂ is to be used for EOR, and the transportation and storage must not infringe international and national treaties and regulations governing the transport and disposal of gas streams.

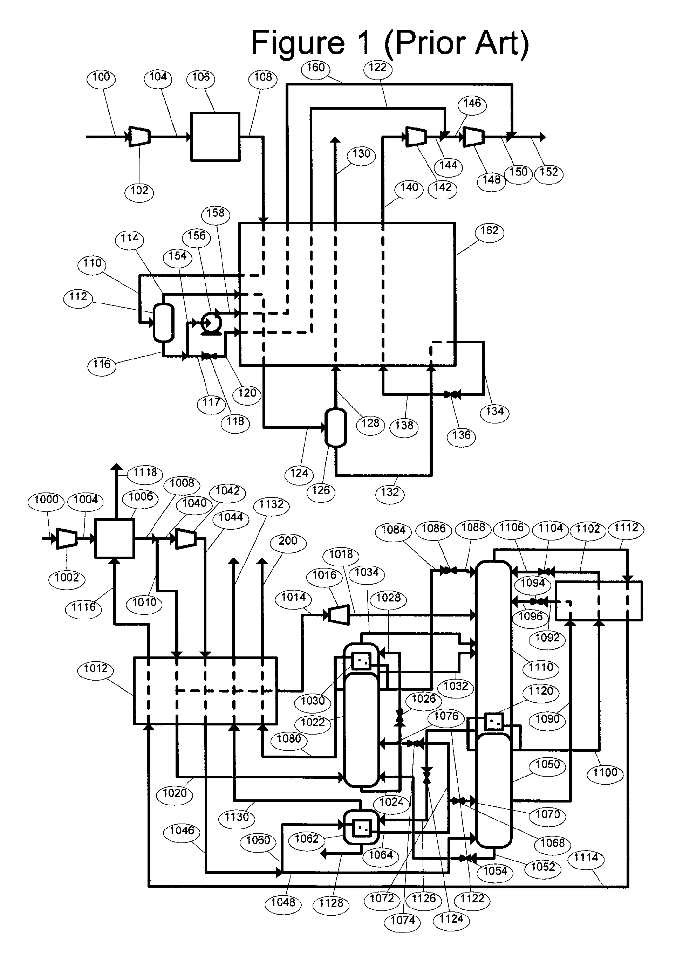

Figure 1 depicts separate prior art CPU and ASU processes that may be integrated with an oxyfuel combustion unit. In the CPU, a stream 100 of CO₂ rich flue gas from an oxyfuel combustion unit (not shown) is compressed in a compressor 102 to about 30 bar (3 MPa) to produce a stream 104 of compressed flue gas. Stream 104 is dried in drier unit 106 and fed as stream 108 to the main heat exchanger 162 where it is cooled to about -32°C by indirect heat exchange to produce partially condensed stream 110. A stream 110 is fed to a first phase separator 112 for separation into a vapour stream 114 and a stream 116 of carbon dioxide liquid.

The vapour stream 114 from this first separator is fed to the main heat exchanger 162 where it is further cooled to about -54°C and partially condensed. The partially condensed stream 124 is fed to a second phase separator 126 where it is a separated into a vapour stream 128 and a stream 132 of carbon dioxide liquid. Stream 128 containing the non-condensable gases is warmed in the main heat exchanger to produce stream 130 and may be vented at pressure, heated and expanded for power recovery, or expanded within the process to provide refrigeration.

Stream 116 of carbon dioxide liquid from the first separator 112 is split into two streams. The first stream 154 is pumped to the final CO₂ pressure of 110 bar (11 MPa) in pump 156 and fed as stream 158 to the main heat exchanger 162 where it is vaporized and warmed by indirect heat exchange to produce stream 160 of carbon dioxide gas. The second stream 117 is reduced in pressure in valve 118 to produce a stream 120 of reduced pressure carbon dioxide liquid at about 18 bar (1.8 MPa) which is then fed to the main heat exchanger 162 where it is vaporized and warmed to produce a stream 122 of carbon dioxide gas.

Stream 132 of carbon dioxide liquid is warmed to produced a stream 134 of warmed carbon dioxide liquid which is then reduced in pressure in valve 136 to produce a stream 138 of reduced pressure carbon dioxide liquid at about 8 bar (0.8 MPa). Stream 138 is fed to the main heat exchanger 162 where it is vaporized and warmed to produce a stream 140 of warmed carbon dioxide gas.

Stream 140 is compressed in a first CO₂ product compressor 142 to produce a stream 144 of compressed carbon dioxide gas at about 18 bar (1.8 MPa). Streams 144 and 122 of carbon dioxide gas are combined, and the combined stream 146 is compressed in a second CO₂ product compressor 148 to produce a stream 150 of compressed carbon dioxide gas at about 110 bar (11 MPa). Streams 150 and 160 are combined to form product stream 152.

The refrigeration duty in the CPU is provided primarily by indirect heat exchange with carbon dioxide liquids produced from the flue gas, with about 6% of the cooling duty being provided by indirect heat exchange with stream 128 comprising non-condensable gases.

The ASU exemplified in Figure 1 has three columns, *viz.* a higher pressure column 1050, an intermediate pressure column 1022, and a lower pressure column 1110. A stream 1000 of ambient air is compressed in a first part 1002 of a main air compressor to produce a stream 1004 of compressed air which is then cooled and cleaned of impurities in front-end purification unit 1006 to produce a stream 1008 which is split into two parts, streams 1010 and 1040. The first part 1010 flows directly to the main heat exchanger 1012, and the second part 1040 is further compressed in a second part 1042 of the main air compressor and is then fed as stream 1044 to the main exchanger.

Intermediate pressure stream 1010 is cooled to an intermediate temperature and split into two parts. The first part 1014 is expanded in expander 1016 to form expanded stream 1018 and fed to the lower pressure column 1110. The second part is further cooled in the main exchanger 1012 and fed as stream 1020 to the intermediate pressure column 1022.

The higher pressure stream 1044 is cooled in the main exchanger 1012 to close to its dew point to form stream 1046 which is then split into two further streams, 1048 and 1060. Stream 1048 feeds the higher pressure column 1050. Stream 1060 is condensed in an oxygen product reboiler 1062 to form stream 1064 which is split to form streams 1068 and 1072. Stream 1068 is reduced in pressure in valve 1070 and fed to the higher pressure column 1050. Stream 1072 is reduced in pressure in valve 1074 to form stream 1076 which is fed to the intermediate pressure column 1022.

In both the higher pressure column 1050 and the intermediate pressure column 1022, a vapour air feed is separated into a nitrogen-enriched overhead vapour and an oxygen-enriched bottoms liquid.

A stream 1052 of oxygen-rich liquid from the higher pressure column 1050 is reduced in pressure in valve 1054 and then fed to the bottom of the intermediate pressure column as stream 1056. A stream 1024 of oxygen-rich liquid is removed from the bottom of the intermediate pressure column 1022, reduced in pressure in valve 1026 and fed as stream 1028 to a condenser 1030 for the intermediate pressure column 1022. The reduced pressure oxygen-rich liquid is partially boiled by indirect heat exchange to produce liquid and vapour parts which are fed as streams 1032 and 1034 respectively to the lower pressure column 1110.

Nitrogen-rich overhead vapour from the top of the higher pressure column is condensed by indirect heat exchange in the main reboiler-condenser 1120, and part of the resulting liquid is returned to the higher pressure column 1050 as reflux. The rest of the nitrogen-rich liquid (stream 1100) is subcooled by indirect heat exchange to produce stream 1102, reduced in pressure in valve 1104 and fed as stream 1106 to the top of the lower pressure column 1110 as reflux.

A part of the nitrogen-rich overhead vapour from the top of the intermediate pressure column 1022 is fed as stream 1080 to the main heat exchanger 1012 where it is warmed to produce a stream 200 of gaseous nitrogen. The rest of this vapour is condensed in reboiler-condenser 1030. Part of the resulting liquid is returned to the intermediate pressure column 1022 as reflux. The remaining part, stream 1084, is reduced in pressure in valve 1086 and fed as stream 1088 to the top of the lower pressure column 1110.

A liquid stream 1090 having a composition similar to air is taken from an intermediate location in the higher pressure column 1050, subcooled by indirect heat exchange to form stream 1092, reduced in pressure in valve 1094 to form stream 1096 and fed to an intermediate location in the lower pressure column 1110.

The lower pressure column 1110 separates the feeds into nitrogen overhead vapour and oxygen bottoms liquid. Liquid oxygen is withdrawn as stream 1122 from the bottom of the lower pressure column 1110, adjusted in pressure in valve 1124 to form stream 1126 and boiled in oxygen product reboiler 1062. A liquid oxygen product stream 1128 may be taken from this reboiler, but most of the oxygen product is taken as vapour in stream 1130, and warmed in the main exchanger 1012 to form stream 1132 of gaseous oxygen. Stream 1132 can be used for combustion of coal in the boiler.

A stream 1112 of nitrogen is taken from the top of the lower pressure column 1112, warmed by indirect heat exchange, first in the subcooler to produce stream 1114 and then in the main heat exchanger 1012, to produce stream 1116 which is then used in the front-end cooling and purification system 1006 before being vented to the atmosphere as stream 1118.

A report by Allam & Spilsbury entitled "A study of the extraction of CO2 from the flue gas of a 500 MW pulverized coal fired boiler" (Energy Convers. Mgmt. Vol. 33; No. 5-8; pp 373-378, 1992) discloses an oxyfuel combustion process for power generation in which oxygen is supplied from an integrated ASU, and in which carbon dioxide from the flue gas is purified by low temperature distillation under elevated pressure. Refrigeration duty for the process is provided by indirect heat exchange with individually expanded streams containing non-condensable components from the flue gas itself, and oxygen gas and waste nitrogen gas from the ASU. All of the carbon dioxide product is in liquid form.

EP 0 965 564 A discloses a process for the low temperature purification of carbon dioxide by distillation under elevated pressure. Refrigeration duty for the process is provided by evaporation of liquid ammonia in a closed loop refrigeration cycle and a small portion of the carbon dioxide liquid produced in the process.

WO 2010/017968 A discloses a process for the cryogenic distillation of air to supply oxygen to an oxyfuel power plant. Refrigeration duty for the process is provided by indirect heat exchange with product streams from the distillation, including a nitrogen gas stream which is taken from the higher pressure column, and is warmed and expanded. A key feature of this process is that additional pressurized nitrogen is warmed above ambient temperature, expanded, re-warmed and re-expanded to recover power.

FR 2 934 170 A discloses a CPU process in which refrigeration duty is provided primarily by evaporating carbon dioxide product liquid at different pressure levels.

In an oxyfuel power plant with CO₂ capture, both the ASU and CPU consume power and reduce the power available for export. For example, in a report by Fu & Gundersen entitled "Heat integration of an oxy-combustion process for coal-fired power plants with CO2 capture by pinch analysis" (Chemical Engineering Transactions, Vol. 21, 2010, pp 181-186), there is disclosed an exergy analysis for an oxy-combustion process for a supercritical pulverized coal power plant with CO₂ capture. The results indicate that the compression processes in the ASU and CPU are responsible for the largest exergy losses related to CO₂ capture. The report speculates that these losses can be reduced by heat integration between the ASU and CPU. However, no further details of how the heat integration might be achieved are provided.

It is an object of the present invention to provide a method of purifying crude carbon dioxide gas in which the total parasitic power consumption of the CPU can be reduced.

It is an object of preferred embodiments of the present invention to provide a method of generating power using an oxyfuel combustion process with CO₂ capture, in which the total parasitic energy consumption of the ASU and CPU is reduced.

It is an object of preferred embodiments of the present invention to provide a method of purifying crude carbon dioxide gas, or of generating power, in which carbon dioxide liquid may be withdrawn as a product and optionally stored or pumped to line pressure prior to vaporisation.

It is an object of preferred embodiments of the present invention to provide a method of purifying crude carbon dioxide gas, or of generating power, in which the energy required to compress gaseous carbon dioxide product is reduced.

The Inventor has discovered that the total parasitic power consumption of a carbon dioxide purification plant purifying a crude carbon dioxide gas can be reduced significantly provided that the refrigeration duty for cooling the feed to the plant is provided in part by evaporating at least one first liquid refrigerant (*e.g.* carbon dioxide liquid derived from the feed and/or recirculating ammonia), and in another part by heating (without evaporation) at least one further refrigerant fluid, preferably a fluid that is independent of, *i.e.* not derived from, the crude carbon dioxide gas.

Thus, according to a first aspect of the present invention, there is provided a method of purifying crude carbon dioxide gas containing at least one non-condensable gas contaminant, under elevated pressure in a CPU, said method comprising:
feeding crude carbon dioxide gas to the CPU;
cooling and condensing carbon dioxide gas from the crude carbon dioxide gas; and
separating condensed carbon dioxide gas from said non-condensable gas contaminant(s) to produce at least one carbon dioxide liquid and a tail gas comprising said non-condensable gas contaminant(s),
wherein the method requires refrigeration duty for cooling and condensing carbon dioxide gas, said refrigeration duty being provided in at least a first part by indirect heat exchange against at least one liquid first refrigerant thereby evaporating said first refrigerant(s), and a second part by indirect heat exchange against sensible heat energy alone of at least one second refrigerant.

The method has particular application where the CPU is purifying flue gas from an oxyfuel combustion process, or where the CPU is integrated with a cryogenic ASU. In preferred embodiments, the CPU is purifying flue gas from an oxyfuel combustion process to which oxygen is supplied from an ASU that is integrated with the CPU.

In an oxyfuel power plant that includes both an ASU for supplying oxygen for the combustion, and a CPU for purifying the flue gas, the power consumption of the combined system may be reduced by providing part of the refrigeration duty for the CPU by expanding nitrogen from the ASU. Even though the power consumption of the CPU is not reduced by as much as the energy required to compress nitrogen from atmospheric pressure to its supply pressure, the power of the carbon dioxide compression can be still be reduced by more than the ASU power increases when it produces the pressurized nitrogen, resulting in a net power reduction. Thus, in preferred embodiments, the CPU and ASU are thermally integrated.

The second refrigerant is preferably nitrogen gas imported from the ASU or carbon dioxide liquid exported from the CPU, subcooled in the ASU and imported back to the CPU. In such embodiments, the total energy consumption of the ASU and CPU can be reduced significantly.

The invention concerns a method of purifying dry crude carbon dioxide gas containing at least one non-condensable gas contaminant, under elevated pressure in a CPU. The method comprises feeding crude carbon dioxide gas to the CPU; cooling and condensing carbon dioxide gas from the crude carbon dioxide gas; and separating condensed carbon dioxide gas from said non-condensable gas contaminant(s) to produce at least one carbon dioxide liquid and a tail gas comprising the non-condensable gas contaminant(s). The method requires refrigeration duty for cooling and condensing carbon dioxide gas. The refrigeration duty is provided in at least a first part by indirect heat exchange against at least one liquid first refrigerant thereby evaporating said first refrigerant(s), and a second part by indirect heat exchange against sensible heat energy alone of at least one second refrigerant. It should be noted that, while the second refrigerant gives up sensible heat alone, the crude carbon dioxide gas still condenses. The carbon dioxide purification process in the CPU takes place at sub-ambient temperature, for example at a temperature below 0°C, *e.g.* from -20°C to -60°C.

The crude carbon dioxide gas is dry, *i.e.* the vapour pressure of water in the crude carbon dioxide gas is less than the vapour pressure of ice at the lowest temperature. For example, there should be less than 0.4 ppm water if the crude carbon dioxide gas is at -60°C and 30 bar, or less than 0.2 ppm water if the crude carbon dioxide gas is at -60°C and 60 bar, or less than 1.4 ppm water if the crude carbon dioxide gas is at -50°C and 30 bar.

The crude carbon dioxide gas to be purified in the CPU usually contains at least 40 % carbon dioxide, *e.g.* from 40% to 90%, or from 60% to 90%, or from 65% to 85%, carbon dioxide. Flue gas from an oxyfuel combustion process typically contains such amounts of carbon dioxide and the method has particular application in the purification of flue gas generated by oxyfuel combustion of a fuel selected from the group consisting of carbonaceous fuel, such as coal; hydrocarbonaceous fuel, such as methane or natural gas; and biomass.

The term "elevated pressure" is intended to mean a pressure that is significantly greater than atmospheric pressure. For example, the term is intended to exclude minor elevations in pressure over atmospheric pressure, such as those elevations provided by a blower or fan in order to force a gas through apparatus operating at about atmospheric pressure. Such minor pressure elevations are considered to be insignificant in the context of the present invention.

The elevated pressure in the CPU is usually at least 2 bar (0.2 MPa), *e.g.* at least 3 bar (0.3 MPa), or at least 5 bar (0.5 MPa). The elevated pressure is usually no more than about 100 bar (10 MPa) and preferably no more than about 50 bar (5 MPa). The elevated pressure may be from 10 bar to 50 bar (0.5 MPa to 5 MPa), or from 20 bar to 40 bar (1 MPa to 4 MPa), *e.g.* about 30 bar (3 MPa).

The CPU comprises at least one heat exchanger within which the carbon dioxide gas is cooled and condensed by indirect heat exchange against the refrigerants.

The crude carbon dioxide gas may be purified in the CPU by distillation to produce carbon dioxide bottoms liquid and an overhead vapour (or tail gas) comprising the non-condensable gas contaminant(s). In such embodiments, the CPU comprises a distillation column system.

However, in preferred embodiments, the crude carbon dioxide gas is purified by cooling and condensing the carbon dioxide gas by indirect heat exchange, thereby leaving the non-condensable gas contaminant(s) as vapour. The condensed carbon dioxide gas is then separated from the non-condensable gas contaminant(s) in a phase separator to produce a carbon dioxide liquid and an overhead vapour. If this overhead vapour should contain a sufficiently low concentration of carbon dioxide gas, then it can provide the tail gas. On the other hand, if the overhead vapour should still contain significant quantities of carbon dioxide, then the overhead vapour may be further cooled to condense further carbon dioxide gas by indirect heat exchange, thereby leaving the non-condensable contaminant(s) as vapour. The condensed further carbon dioxide gas is then separated from the non-condensable gas contaminants in a further phase separator to produce a further carbon dioxide liquid and a further overhead vapour (or tail gas). Additional stages of cooling and phase separation can be used as required.

The refrigeration duty of the purification method is the heat that needs to be removed from the crude carbon dioxide gas to cool and condense carbon dioxide in the gas. In the present invention, this duty is provided in at least a first part by indirect heat exchange against at least one liquid first refrigerant thereby evaporating the first refrigerant(s), and a second part by indirect heat exchange against sensible heat energy alone of a second refrigerant. The second refrigerant can also remove latent heat from the crude carbon dioxide gas feed as the feed will be condensing as it is being cooled once it is below its dew point.

The terms "first part" and "second part" in the context of the refrigeration duty are intended as general terms meaning first and second portions respectively of the total refrigeration duty required for cooling and condensing the carbon dioxide. These terms do not necessarily refer to the duty required above and below the carbon dioxide dew point.

The indirect heat exchange usually takes place within the main heat exchanger within the CPU.

Evaporation of the liquid first refrigerant(s) involves an exchange of thermal energy in the form of latent heat energy to the liquid first refrigerants(s) from the crude carbon dioxide gas. In embodiments involving a liquid first refrigerant under supercritical conditions, that liquid first refrigerant "pseudo-evaporates". The term "evaporation" is intended to embrace pseudoevaporation in embodiments where the liquid first refrigerant is a supercritical liquid. "Pseudoevaporation" is the rapid reduction in density with increasing temperature that occurs (with a relatively large heat input in a narrow temperature range) in a supercritical fluid as it is heated from below a pseudo-saturation temperature (point of inflection on the temperature versus enthalpy curve) to above it. Therefore, the supercritical fluid goes from a denser, liquid-like state to a less dense, gas-like state over a temperature range but without a definitive phase change.

Sensible heat energy may also be transferred prior to, and/or after, transfer of the latent heat energy resulting, for example, in warming of the resultant vaporized first refrigerant.

Sensible heat energy is the energy exchanged by a thermodynamic system that has, as its sole effect, a change of temperature, *i.e.* there is no change in the phase of the system. The second part of the refrigeration duty in the present invention is provided by indirect heat exchange of sensible heat energy alone. Thus, where the second refrigerant is a subcritical liquid, there is no evaporation of the second refrigerant when providing the second part of the refrigeration duty.

The first part of the refrigeration duty may be provided by a single liquid first refrigerant, or by more than one liquid first refrigerant.

The liquid first refrigerant or, where there is more than one, at least one of the liquid refrigerants may be an external refrigerant, that is a liquid refrigerant that is independent of, *i.e.* not derived from, the crude carbon dioxide gas. A suitable example of such a refrigerant is liquid ammonia. In preferred embodiments, such a refrigerant circulates in a closed loop refrigeration cycle.

The liquid first refrigerant or, where there is more than one, at least one of the liquid refrigerants may be liquefied carbon dioxide, *e.g.* the carbon dioxide liquid, or where there is more than one, at least one (and preferably each) of the carbon dioxide liquids produced in the CPU. In embodiments in which more than one carbon dioxide liquid is produced in the CPU, at least a portion of each of the carbon dioxide liquids is usually used to provide the first part of the refrigeration duty as the liquid first refrigerants.

The or each liquid first refrigerant is typically evaporated by the indirect heat exchange against the cooling and condensing crude carbon dioxide gas. Where the liquid first refrigerant is supercritical, it typically "pseudo-evaporates".

In preferred embodiments, a further part of the refrigeration duty is provided by indirect heat exchange against the tail gas. The further part is usually no more than 10%, preferably from 5% to 7%, *e.g.* about 6%, of the refrigeration duty. The remainder of the refrigeration duty is usually composed of the first and second parts.

Providing refrigeration by expansion of a gas in a reverse Brayton cycle is less efficient that evaporating liquid in a reverse Rankine cycle in the temperature range encountered in a CPU. Therefore, the Inventor has determined that the second refrigerant is preferably used as cold as possible so that the reverse Brayton cycle is as efficient as possible, thereby maximizing the overall benefit. In this connection, the second refrigerant preferably has a temperature that is sufficiently low to cool the crude carbon dioxide gas to below the CO₂ dew point temperature, and preferably to close to the CO₂ triple point temperature. For example, the crude carbon dioxide gas is cooled to a temperature from - 56°C to 10°C. As would be readily appreciated by the skilled person, the CO₂ dew point temperature depends on the composition and pressure of the gas. In addition, the skilled person would appreciate that the temperature of the second refrigerant could be lower than - 56°C provided that the heat exchanger is designed to avoid freezing on its surface, for example by using co-current flow at the cold end.

The refrigeration duty generally has a colder part that both cools and condenses said crude carbon dioxide gas, and a warmer part that cools the carbon dioxide gas with no condensation. In these embodiments, the point at which the colder part of the refrigeration duty becomes the warmer part is the CO₂ dew point of the crude carbon dioxide gas. Since it is preferably used as cold as possible, the second refrigerant usually provides at least a portion of the colder part of the refrigeration duty.

Since a reverse Brayton cycle tends to be less efficient that a reverse Rankine cycle for providing refrigeration, the second refrigerant is preferably used in a quantity that is no more than that sufficient to optimize power consumption. Generally, the second refrigerant provides no more than 30%, preferably no more than 25%, of the refrigeration duty. For example, for nitrogen extraction from an ASU, typically a molar nitrogen flow between 0.5 and 1.5 times the oxygen flow optimizes power consumption and this provides a net cooling duty below the feed dew point between about 7% and 21% of the total feed cooling duty in the CPU. The second refrigerant usually provides more than 1% of the refrigeration duty. The second refrigerant is preferably independent of, i.e. not derived from, the crude carbon dioxide gas. The second refrigerant may be derived from said crude carbon dioxide gas and exported from the CPU for cooling. In some preferred embodiments, the second refrigerant is imported into the CPU.

The second refrigerant may be a liquid, preferably a subcritical liquid (which is not vaporized during heat exchange). However, in preferred embodiments, the second refrigerant is a gas, preferably nitrogen gas.

The CPU is preferably integrated with a cryogenic ASU and the second refrigerant is nitrogen gas imported from the ASU.

In preferred embodiments, the method comprises importing a pressurized gas into the CPU; and expanding the pressurized gas in said CPU after optionally cooling said gas, to produce the second refrigerant. In these embodiments, the method may comprise separating compressed air by cryogenic distillation in an ASU to produce nitrogen gas under pressure and gaseous oxygen; importing at least a portion of the nitrogen gas into the CPU; cooling the imported nitrogen gas by indirect heat exchange to form cooled nitrogen gas; expanding the cooled nitrogen gas in the CPU to produce expanded nitrogen gas; and using said expanded nitrogen gas as said second refrigerant to produce warmed nitrogen gas. The cooled nitrogen gas may be expanded in a first expander, warmed and then further expanded in a second expander, and optionally re-warmed.

The temperature of the imported nitrogen gas will vary according to the ambient conditions as the ASU design. For example, the imported nitrogen gas may have a temperature in the range from 0°C to 50°C.

The imported nitrogen gas may then be cooled by indirect heat exchange against the first liquid refrigerant(s), the second refrigerant and/or another stream such as the tail gas comprising non-condensable gases to a temperature in the range from -100°C to 10°C and preferably to below the CO₂ dew point of the crude carbon dioxide gas.

The cooled nitrogen may be expanded over a modest pressure ratio, say less 5 and preferably less than 3. For example, the cooled nitrogen may be expanded from a first pressure in the range from 1.5 to 8 bar to a second pressure in the range from 1 bar to 4 bar, e.g. from 5.5 bar to 1.1 bar.

A portion of the carbon dioxide liquid may be removed as a liquid product, and optionally pumped and warmed to ambient temperature.

Since the air is separated in the ASU at cryogenic temperatures, water and carbon dioxide are removed before the air is cooled and fed to the distillation column system of the ASU. The ASU may comprise a single distillation column operating at elevated pressure, or more than one distillation column, each column operating at different elevated pressures. In preferred embodiments, the ASU comprises either a dual column arrangement comprising a higher pressure column and a lower pressure column in which the columns are thermally integrated by a reboiler/condenser, or a tri-column arrangement comprising a higher pressure column, an intermediate pressure column and a lower pressure column in which the higher pressure column is thermally integrated with the lower pressure column by a first reboiler/condenser, and the intermediate pressure column is thermally integrated with the lower pressure column via a second reboiler condenser. The operating pressure of the higher pressure column is usually from 3 bar to 12 bar (0.3 to 1.2 MPa). The operating pressure of the lower pressure column is usually from 1.1 bar to 5 bar (0.11 to 0.5 MPa). The operating pressure of an intermediate pressure column is usually from 1.8 bar to 8 bar (0.18 to 0.8 MPa).

In other preferred embodiments, the method comprises importing the second refrigerant into the CPU and using the second refrigerant directly, *i.e.* without further processing, to provide the second part of the refrigeration duty. In these embodiments, the method may comprise separating compressed air by cryogenic distillation in an ASU to produce nitrogen gas under pressure and gaseous oxygen; expanding at least a portion of the nitrogen gas to produce expanded nitrogen gas; importing the expanded nitrogen gas into the CPU; and using said expanded nitrogen gas as said second refrigerant to produce warmed nitrogen gas. Water and carbon dioxide are usually removed from compressed air, typically in a purification unit having at least one sorbent bed, to produce the compressed air feed for the ASU. In such embodiments, the sorbent bed(s) may be regenerated using at least a portion of the warmed nitrogen gas. Expanded nitrogen gas could also be used to regenerate CPU feed drier beds.

The second refrigerant may be liquefied carbon dioxide, for example, at least a portion of the carbon dioxide liquid(s) produced in the CPU. The method of these embodiments comprises cooling and partially condensing carbon dioxide gas in the crude carbon dioxide gas; separating the condensed carbon dioxide gas from said non-condensable gas contaminant(s) in a first phase separator to produce a first carbon dioxide liquid and a first overhead vapour comprising said non-condensable gas contaminant(s); dividing said first carbon dioxide liquid into three portions; pumping a first portion of said first carbon dioxide liquid to produce a pumped first portion; reducing the pressure of a second portion of said first carbon dioxide liquid to produce a reduced pressure second portion; pumping a third portion of said first carbon dioxide liquid to produce a pumped third portion, and cooling the pumped third portion to produce a cooled third portion; cooling and condensing carbon dioxide gas in said first overhead vapour; separating the condensed carbon dioxide gas from said non-condensable gas contaminant(s) in a second phase separator to produce a second carbon dioxide liquid and said tail gas comprising said non-condensable gas contaminant(s); warming said tail gas by indirect heat exchange to produce warmed tail gas; and reducing the pressure of said second carbon dioxide liquid after optionally warming said liquid, to produce reduced pressure second carbon dioxide liquid. In these embodiments, the liquid first refrigerant(s) providing the first part of the refrigeration duty are the pumped first portion of first carbon dioxide liquid, the reduced pressure second portion of first carbon dioxide liquid and the reduced pressure second carbon dioxide liquid, and the second refrigerant is the cooled third portion of the first carbon dioxide liquid. The pumped third portion of the first carbon dioxide liquid may be cooled by indirect heat exchange against expanded nitrogen gas in an integrated ASU.

In other embodiments, the second refrigerant may circulate in a closed loop refrigeration cycle within the CPU. In such embodiments, where the second refrigerant is nitrogen gas, make up nitrogen gas may be imported from an integrated ASU as required.

Since providing refrigeration by expansion of a gas in a reverse Brayton cycle is less efficient that evaporating liquid in a reverse Rankine cycle in the temperature range encountered in a CPU, the refrigerant of choice for an independent CPU is the carbon dioxide itself. Only at colder temperatures would the reverse Brayton cycle become more efficient.

Therefore, to maximize the overall benefit, the refrigeration provided to the CPU by expanding nitrogen from the ASU should be as cold as possible (so that the reverse Brayton cycle is as efficient as possible) and use only the quantity of nitrogen necessary to optimize the ASU design (to minimize the impact of the lower efficiency refrigeration cycle). This refrigeration is particularly suited to the colder part of the feed condensation. The provision of external refrigeration allows part of the carbon dioxide to be produced as liquid that may be stored, pumped to the final product pressure (and optionally reheated), or as a cold gas that may be compressed with reduced power input. The balance of the cooling of the CPU feed is provided by evaporating carbon dioxide in an open cycle or reverse Rankine cycle.

The liquid first refrigerant(s) is usually at a temperature in the range from -56°C to 10°C, preferably from -40°C to -10°C. The second refrigerant is usually at a temperature in the range from -100°C to 10°C, preferably from -70°C to -10°C. Suitable pressures for the first and second refrigerants will depend on the fluid used. For carbon dioxide as the liquid first refrigerant, the pressure is usually in the range from 5.2 bar to 42 bar, and for nitrogen as the second refrigerant, the pressure is usually in the range from 1 to 4 bar.

One advantage of preferred embodiments of the present invention is that at least a portion of the carbon dioxide liquid(s) may be removed from the CPU and stored as a liquid. In the prior art depicted in Figure 1, almost the entire inventory of carbon dioxide liquid has to be used to provide refrigeration as typically no more than 5% of the carbon dioxide liquid produced may be withdrawn as a liquid product.

In contrast, the present invention enables removal of significantly more of the carbon dioxide liquid from the CPU as product for storage. In this connection, without an external refrigerant, up to about 50 %, e.g. from more than 5% to 50% or from 10% to 30%, of the carbon dioxide liquid can be removed as a liquid product, depending on the proportion of the refrigeration duty provided by the carbon dioxide liquid. If the evaporating refrigerant is from an external source, e.g. an external ammonia refrigeration cycle, then all of the carbon dioxide liquid could be withdrawn as product. The removed liquid may be pumped to line pressure, for example at least 50 bar (5 MPa), *e.g.* from 100 bar to 200 bar (10 MPa to 20 MPa), and optionally heated to ambient temperature.

The purification method can be used in a method for generating power using an oxyfuel combustion process. In oxyfuel combustion, the fuel is combusted in an oxygen-rich atmosphere comprising at least 20 wt % oxygen and recycled flue gas from the combustion process to moderate the temperature of combustion and control heat flux. Oxygen is usually supplied as pure oxygen, or as an oxygen-rich gas, *e.g.* a gas comprising at least 80% O₂, and is usually supplied from a cryogenic ASU.

The method may be used to purify crude carbon dioxide gas having a flow rate from 200 kmol/h to 40,000 kmol/h which flow rates are typical for net flue gas generated in a "standard" single unit oxyfuel combustion process. Higher flows are possible, e.g. from 40000 kmol/h to 150000 kmol/h, for example if the crude gas is provided from very large power stations, or from multiple "standard" oxyfuel combustion units.

Flue gas from an oxyfuel combustion process usually contains carbon dioxide as the major component, together with SOₓ, NOₓ and the non-condensable gases O₂, N₂, Ar, Kr and Xe. SOₓ is produced by the combustion of elemental sulfur and/or sulfur-containing compounds present in the fuel. O₂ is present in the flue gas from excess O₂ used in the combustion and from air ingress into the combustion unit which is also responsible for the presence of N₂, Ar, Kr and Xe in the flue gas. NOₓ is produced by reaction N₂ with O₂ in the combustion unit.

Further components in the flue gas include solid particulates such as fly ash and soot; water; CO; HCl; CS₂; H₂S; HCN; HF; volatile organic compounds (VOCs) such as CHCl₃; metals including mercury, arsenic, iron, nickel, tin, lead, cadmium, vanadium, molybdenum and selenium; and compounds of these metals.

Flue gas from the combustor is typically washed with water to remove particulates (such as soot and/or fly ash) and water soluble components (such as HF, HCI and/or SO₃). Additionally, the flue gas may be filtered, using equipment such as a baghouse or electrostatic precipitator, to enhance particulate removal. Flue gas may also be desulfurized, *e.g.* in a flue gas desulfurization unit (FGD), before being fed to the CPU for purification.

Since the flue gas is typically at atmospheric pressure, it is then compressed after washing to the elevated pressure to form the carbon dioxide feed gas to be purified by the method. However, if the feed gas originates from a source, such as a pressurized oxyfuel combustion system, that is already at the required elevated pressure, then compression is not required.

SOₓ and/or NOₓ may be removed as sulfuric acid and nitric acid respectively by providing sufficient "hold up" at elevated pressure in the presence of water and oxygen.

The power generation methods according to the present invention comprise combusting a fuel selected from the group consisting of carbonaceous fuels, hydrocarbonaceous fuels and biomass, in an oxygen-rich atmosphere within an oxyfuel combustion unit to produce heat and flue gas; recovering at least a portion of the heat to generate the power; dividing the flue gas after optionally desulfurizing the flue gas, into recycle flue gas and net flue gas; recycling the recycle flue gas to the oxyfuel combustion unit; and compressing and drying the net flue gas to produce dry flue gas under elevated pressure containing at least one non-condensable contaminant.

In a first embodiment, the power generation method comprises cooling and condensing carbon dioxide gas from said dry flue gas, and separating condensed carbon dioxide gas from said non-condensable gas contaminant(s) to produce at least one carbon dioxide liquid and a tail gas comprising said non-condensable gas contaminant(s); separating compressed air by cryogenic distillation in an ASU to produce nitrogen gas under elevated pressure and gaseous oxygen; feeding at least a portion of the gaseous oxygen to the oxyfuel combustion unit; and feeding at least a portion of the nitrogen gas to the CPU wherein the nitrogen gas is cooled by indirect heat exchange to produce cooled nitrogen gas which is then expanded to produce expanded nitrogen gas. The refrigeration duty in the CPU is provided in at least a first part by indirect heat exchange against at least a portion of the carbon dioxide liquid(s) thereby evaporating the liquid(s), and a second part by indirect heat exchange of sensible heat alone against the expanded nitrogen gas. The cooled nitrogen gas may be expanded in a first expander, warmed and then further expanded in a second expander to produce the expanded nitrogen gas.

In a second embodiment, the power generation method comprises feeding the dry flue gas to a CPU wherein carbon dioxide gas from said dry flue gas is cooled and condensed, and separated from said non-condensable gas contaminant(s) to produce at least one carbon dioxide liquid and a tail gas comprising said non-condensable gas contaminants; separating compressed air by cryogenic distillation in an ASU to produce nitrogen gas under elevated pressure and gaseous oxygen; feeding at least a portion of the gaseous oxygen to the oxyfuel combustion unit; expanding in the ASU at least a portion of the nitrogen gas to produce expanded nitrogen gas; and feeding the expanded nitrogen gas to the CPU. The refrigeration duty in the CPU is provided in at least a first part by indirect heat exchange against at least a portion of said carbon dioxide liquid(s) thereby evaporating said liquid(s), and a second part by indirect heat exchange against sensible heat energy alone of said expanded nitrogen gas.

The imported nitrogen gas may be cooled to below the dew point of the carbon dioxide in the feed, e.g. to a temperature in the range from -40°C to 10°C. The cooled nitrogen gas may be expanded over a modest pressure ratio, for example less than 5, and preferably less than 3.

A portion of the carbon dioxide liquid may be removed as a product liquid, and optionally pumped and warmed to ambient temperature.

In a third embodiment, the power generation method comprises feeding the dry flue gas to a CPU for purification, said purification comprising cooling and condensing carbon dioxide gas in the dry flue gas; separating the condensed carbon dioxide gas from said non-condensable gas contaminant(s) in a first phase separator to produce a first carbon dioxide liquid and a first overhead vapour comprising said non-condensable gas contaminant(s); dividing said first carbon dioxide liquid into three portions; pumping a first portion of said first carbon dioxide liquid to produce a pumped first portion; reducing the pressure of a second portion of said first carbon dioxide liquid to produce a reduced pressure second portion; pumping a third portion of said first carbon dioxide liquid to produce a pumped third portion, and cooling the pumped third portion to produce a cooled third portion; cooling and condensing carbon dioxide gas in said first overhead vapour; separating the condensed carbon dioxide gas from said non-condensable gas contaminant(s) in a second phase separator to produce a second carbon dioxide liquid and said tail gas comprising said non-condensable gas contaminant(s); warming said tail gas by indirect heat exchange to produce warmed tail gas; and reducing the pressure of said second carbon dioxide liquid after optionally warming said liquid, to produce reduced pressure second carbon dioxide liquid. The method comprises also separating compressed air by cryogenic distillation in an ASU to produce nitrogen gas under elevated pressure and gaseous oxygen; feeding at least a portion of the gaseous oxygen to said oxyfuel combustion unit; and expanding in the ASU at least a portion of the nitrogen gas to produce expanded nitrogen gas. The refrigeration duty in the CPU is provided in at least a first part by indirect heat exchange with the pumped first portion of first carbon dioxide liquid, the reduced pressure second portion of first carbon dioxide liquid and the reduced pressure second carbon dioxide liquid, and a second part by indirect heat exchange of with sensible heat energy alone of the cooled third portion of the first carbon dioxide liquid. The pumped third portion of the first carbon dioxide liquid may be cooled in the ASU by indirect heat exchange against the expanded nitrogen gas.

The invention will now be described by way of example only with reference to the drawings in which:
FIGURE 1 depicts flowsheets for a prior art CPU and ASU known for use with an oxyfuel combustion process.
FIGURE 2 depicts a CPU flowsheet according to a first embodiment of the present invention.
FIGURE 2a depicts the CPU flowsheet of Figure 2 in which the second refrigerant circulates in a closed loop refrigeration cycle.
FIGURE 2b depicts the CPU flowsheet of Figure 2 in which the second refrigerant is expanded nitrogen gas imported into the CPU at elevated pressure from an ASU.
FIGURE 3 depicts a CPU flowsheet according to a second embodiment of the present invention.
FIGURE 3a depicts the CPU flowsheet of Figure 3 in which the second refrigerant is expanded nitrogen gas imported into the CPU at elevated pressure from an ASU.
FIGURE 4 depicts a CPU flowsheet according to a third embodiments of the present invention.
FIGURE 4a depicts the CPU flowsheet of Figure 4 in which the second refrigerant is expanded nitrogen gas imported into the CPU from the ASU.
FIGURE 5 depicts a CPU flowsheet according to a fourth embodiment of the present invention.
FIGURE 5a depicts the CPU flowsheet of Figure 5 in which the second refrigerant is subcooled carbon dioxide liquid produced by the CPU and subcooled in the ASU.

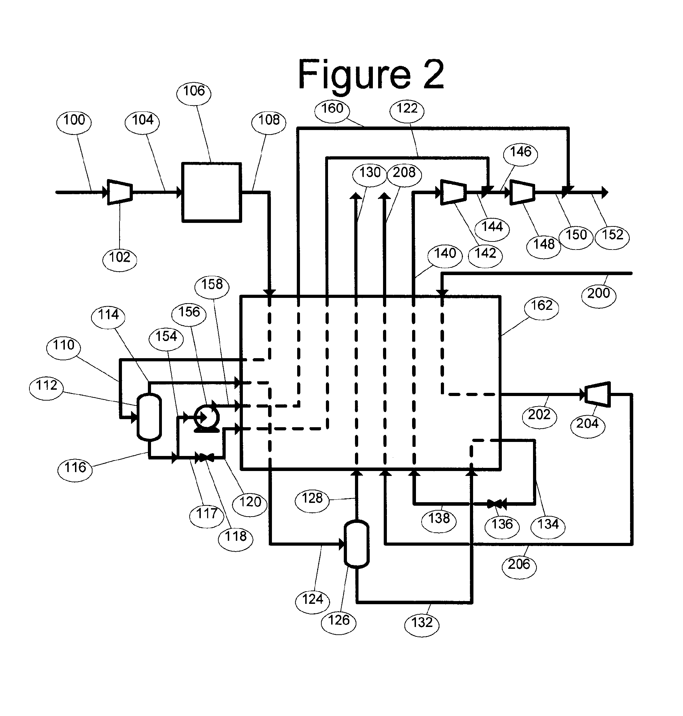

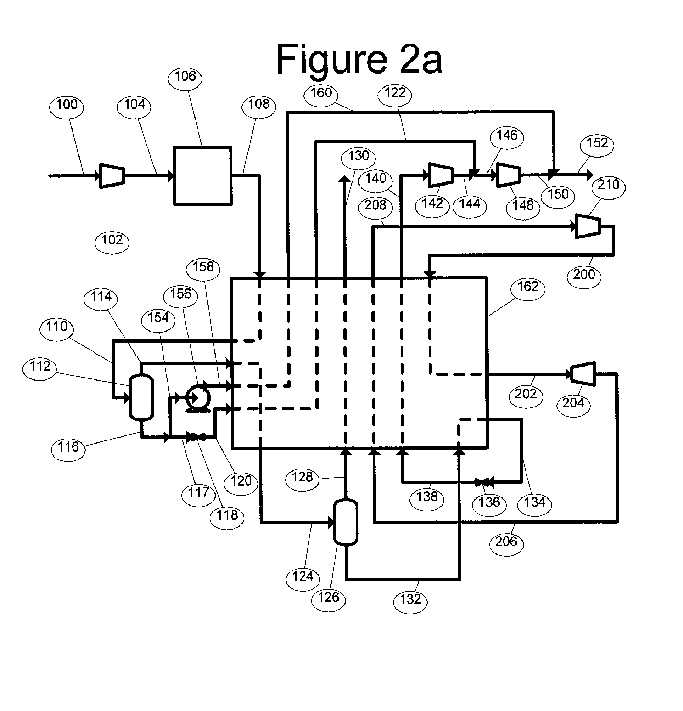

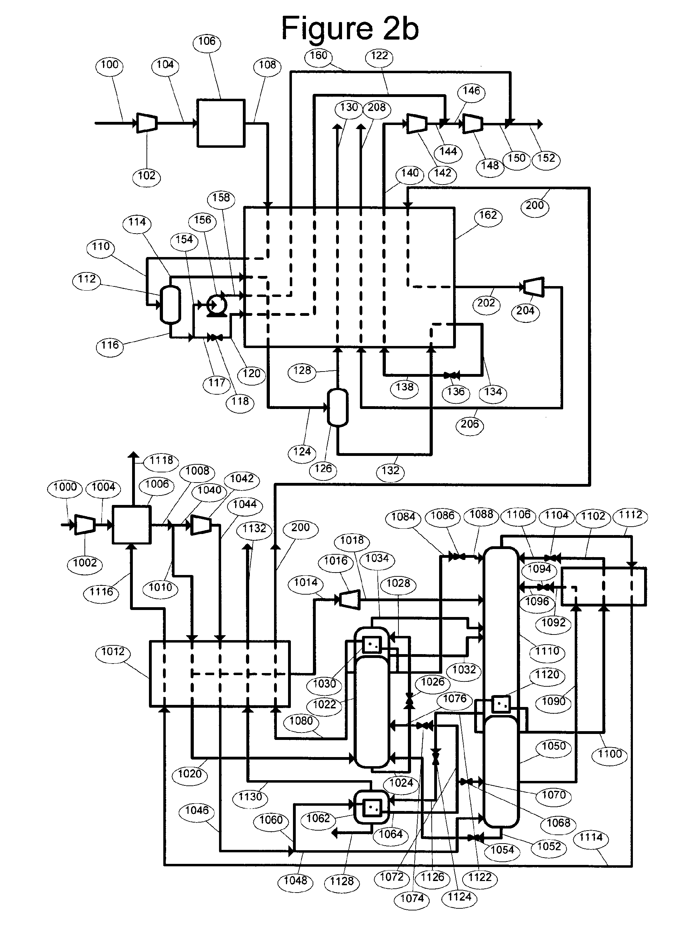

Figure 2 depicts the CPU process of Figure 1 to which an expander 204 has been added. An external vapour stream 200 is cooled to an intermediate temperature in the main heat exchanger 162 to produce cooled stream 202 which is expanded in expander 204 to produce expanded stream 206. The expanded stream 206 is warmed in the main heat exchanger 162 to produce an exhaust stream 208 of warmed refrigerant gas which may be vented to atmosphere, or used for some other purpose, for example evaporative chilling of water.
Figure 2a depicts the same process as Figure 2 in which the exhaust stream 208 is recirculated in a compressor 210 where it is compressed to form stream 200 in a closed loop refrigeration cycle. Only a very small make-up stream is required to replace any losses from the system.

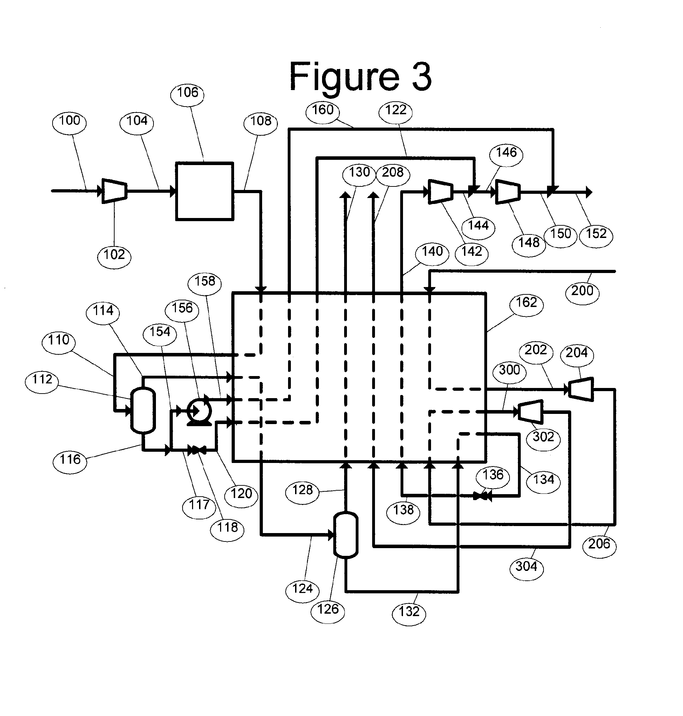

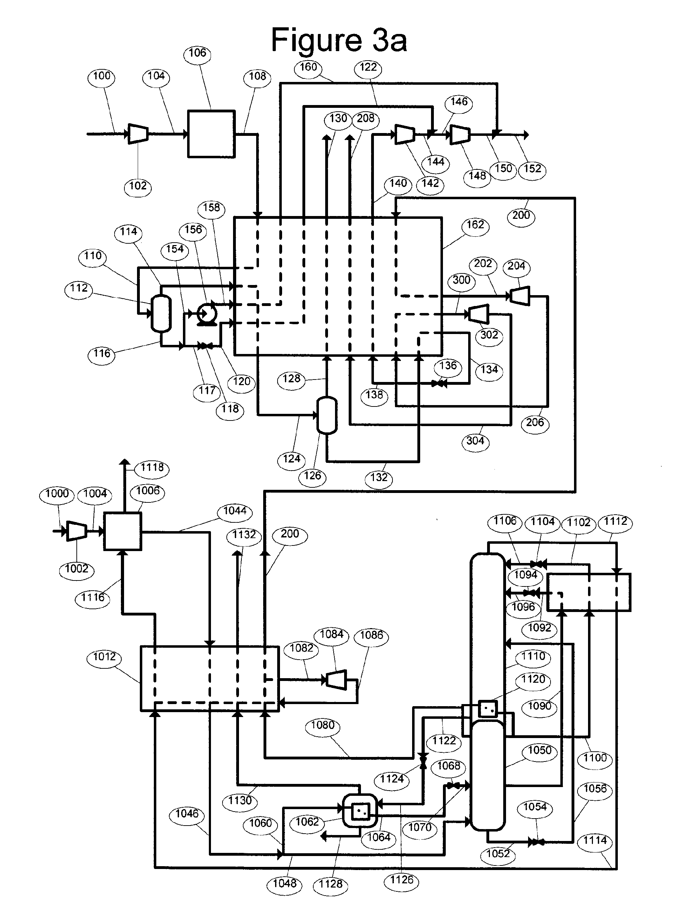

Figure 2b depicts the ASU of Figure 1 integrated with the CPU of Figure 2 through a pressurised nitrogen stream 200 from the intermediate pressure column 1022 of the ASU. Figure 3 depicts the process of Figure 2 to which a second expander 302 has been added. The exhaust stream 206 of the first expander 204 is warmed in the main exchanger 162 to produce a warmed stream 300 which is then further expanded in the second expander 302 to form a further expanded stream 304. Stream 304 is warmed in the main heat exchanger 162 to produce exhaust stream 208 which is then and vented, recycled or used in another process. This process is useful if the pressure of the second refrigerant is higher than about 3 bar (0.3 MPa), as the refrigeration from a single expander would otherwise be provided less efficiently over too wide a temperature range.
Figure 3a depicts the process of Figure 3 integrated with an alternative dual column ASU process in which nitrogen is taken from the higher pressure column 1050 operating at around 4 bar (0.4 MPa). Since the intermediate pressure column 1022 has been omitted, the entire air feed goes to the higher pressure column 1050; stream 1056 of oxygen-rich bottoms liquid is fed from the higher pressure column 1050 to an intermediate location of the lower pressure column 1110, and the entire nitrogen reflux to the lower pressure column 1110 is condensed overhead vapour from the higher pressure column 1050. Additional refrigeration duty in the ASU is provided by expanding a stream 1082 of nitrogen gas in expander 1084 to produce expanded stream 1086 which is then fed to the main heat exchanger 1012 where it is combined with waste nitrogen from stream 1114 and heated to produce stream 1116.

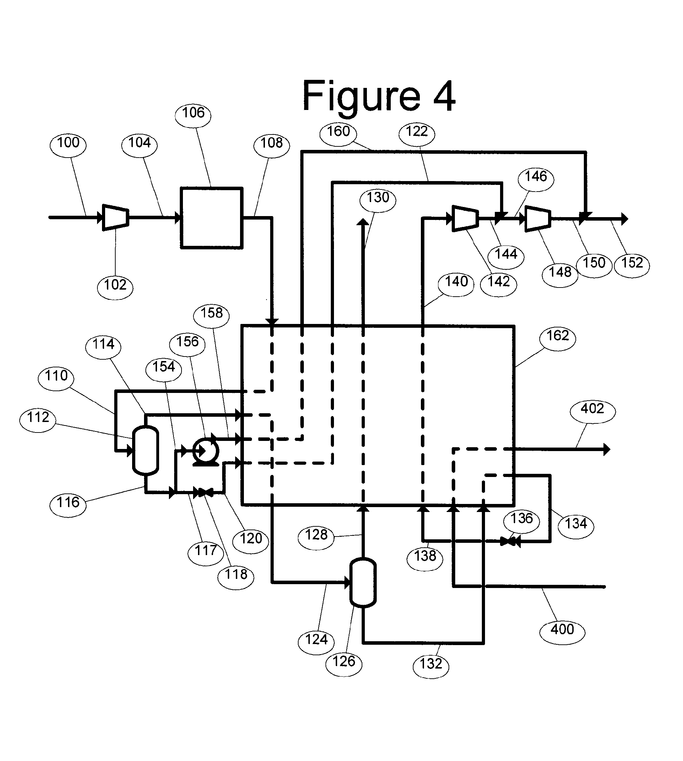

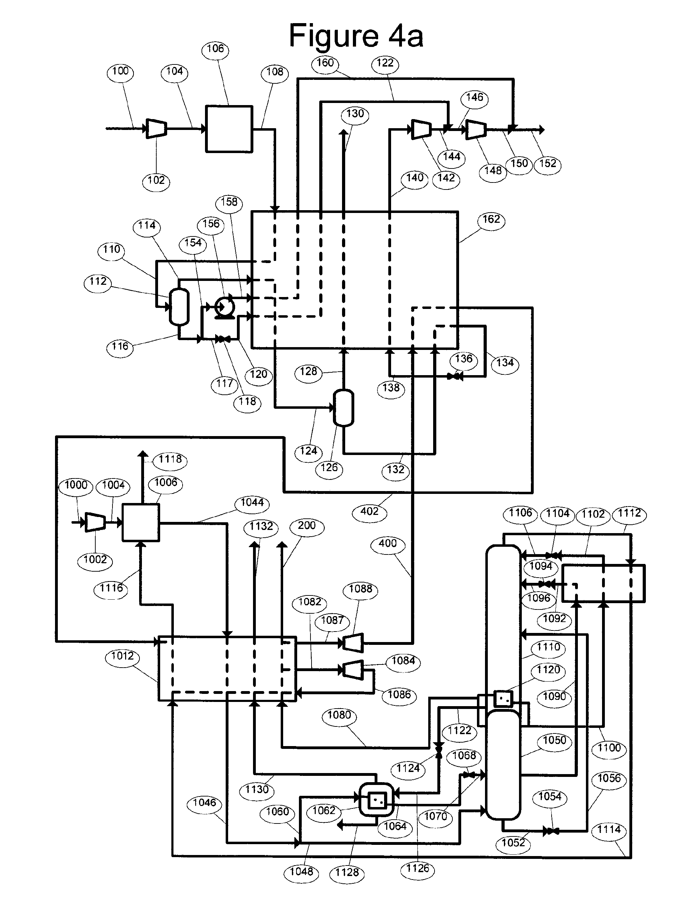

Figure 4 depicts the prior art process of Figure 1 with the addition of external refrigeration from a stream 400 that is heated (without changing phase) and is then vented or returned to an external process.
Figure 4a depicts the process of Figure 4 integrated with the ASU of Figure 3a in which the stream 400 that is fed to the CPU is the exhaust of expander 1088 that operates at a warmer temperature than the main ASU expander 1084. Stream 400 is heated in the CPU and returned to the ASU as stream 402 where it is mixed with waste nitrogen from stream 1114 in the main heat exchanger 1012 to be fully reheated to ambient conditions as stream 1116. Stream 1116 is then used to regenerate the sorbent bed(s) of the front end purification unit 1006.

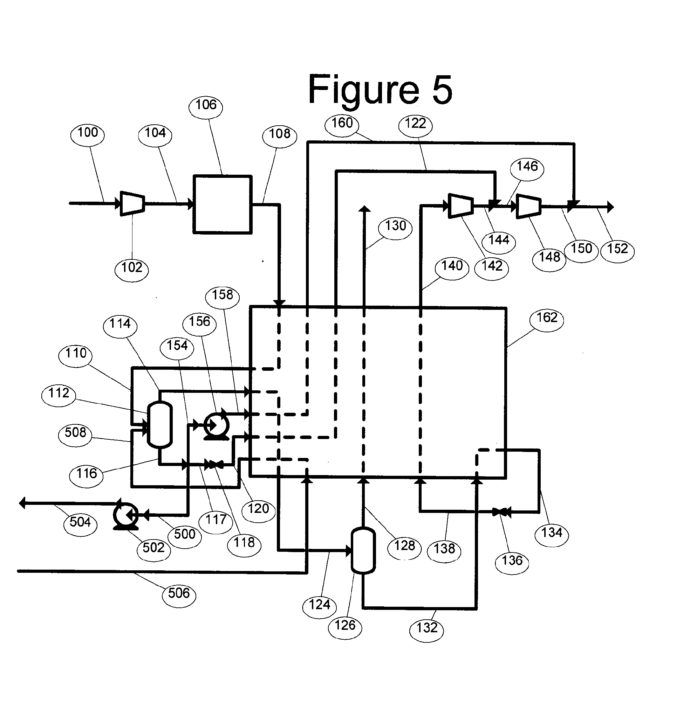

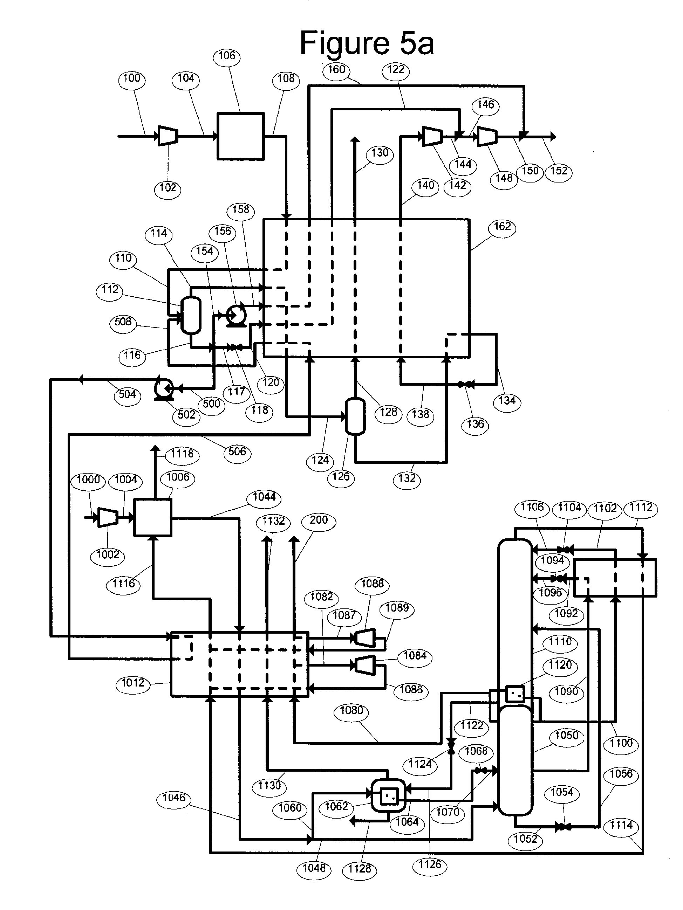

Figure 5 depicts the process of Figure 1 with the addition of external refrigeration provided to recirculating carbon dioxide liquid. A part 500 of the carbon dioxide liquid removed from the first phase separator 112 is pumped in pump 502 to produce pumped stream 504 which leaves the CPU. The stream returns as cooled stream 506, which is reheated in the main exchanger 162 and returned to separator 112.
Figure 5a depicts the process of Figure 5 integrated with the ASU of Figure 4a.
   Additional refrigeration is provided at the warm end of the ASU by expanding a part 1087 of the pressurised nitrogen in a warm expander 1088. This additional refrigeration is used to cool stream 504 from the CPU before returning it as cooled stream 506.

Aspects of the invention include:
#1. A method of purifying crude carbon dioxide gas containing at least one non-condensable gas contaminant, under elevated pressure in a carbon dioxide purification unit ("CPU"), said method comprising:
   feeding crude carbon dioxide gas to the CPU;
   cooling and condensing carbon dioxide gas from the crude carbon dioxide gas; and
   separating condensed carbon dioxide gas from said non-condensable gas contaminant(s) to produce at least one carbon dioxide liquid and a tail gas comprising said non-condensable gas contaminant(s),
   wherein the method requires refrigeration duty for cooling and condensing carbon dioxide gas, said refrigeration duty being provided in at least a first part by indirect heat exchange against at least one liquid first refrigerant thereby evaporating said first refrigerant(s), and a second part by indirect heat exchange against sensible heat energy alone of at least one second refrigerant.
#2. A method according to #1, wherein at least a portion of said first part of the refrigeration duty is provided by at least one of said carbon dioxide liquid(s) as said liquid first refrigerant(s).
#3. A method according to #1 or #2, wherein a further part of said refrigeration duty is provided by indirect heat exchange against said tail gas.
#4. A method according to #3, wherein said further part is no more than 10 % of said refrigeration duty.
#5. A method according to #3 or #4, wherein said first and second parts provide the remainder of said refrigeration duty.
#6. A method according to any of #1 to #5, wherein the second refrigerant has a temperature that is sufficiently low to cool said crude carbon dioxide gas to below the CO₂ dew point temperature, and preferably close to the CO₂ triple point temperature.
#7. A method according to any of #1 to #6, wherein the second refrigerant has a temperature that is sufficiently low to cool said crude carbon dioxide gas to a temperature from -56°C to 10°C.
#8. A method according to any of #1 to #7, wherein said refrigeration duty has a colder part that both cools and condenses said crude carbon dioxide gas and a warmer part that cools the crude carbon dioxide gas with no condensation, said second refrigerant providing at least a portion of said colder part.
#9. A method according to any of #1 to #8, wherein said second refrigerant is used in a quantity that is no more than that sufficient to optimize power consumption.
#10. A method according to any of #1 to #9, wherein said second refrigerant provides no more than 30%, preferably no more than 20%, of the refrigeration duty.
#11. A method according to any of #1 to #10, wherein said second refrigerant is independent of said crude carbon dioxide gas.
#12. A method according to any of #1 to #11, wherein the second refrigerant is derived from said crude carbon dioxide gas and exported from the CPU for cooling.
#13. A method according to any of #1 to #12, wherein said second refrigerant is imported into the CPU.
#14. A method according to any of #1 to #13, wherein said second refrigerant is a gas.
#15. A method according to any of #1 to #14, wherein said second refrigerant is nitrogen gas.
#16. A method according to any of #1 to #15, wherein the CPU is integrated with a cryogenic air separation unit ("ASU") and the second refrigerant is nitrogen gas imported from the ASU.
#17. A method according to any of #1 to #16, comprising:
   importing a pressurized gas into the CPU; and
   expanding said pressurized gas in said CPU after optionally cooling said gas, to produce said second refrigerant.
#18. A method according to any of #1 to #16, comprising:
   separating compressed air feed by cryogenic distillation in an ASU to produce nitrogen gas under pressure and gaseous oxygen;
   importing at least a portion of said nitrogen gas into the CPU;
   cooling said imported nitrogen gas by indirect heat exchange to form cooled nitrogen gas;
   expanding said cooled nitrogen gas in the CPU to produce expanded nitrogen gas; and
   using said expanded nitrogen gas as said second refrigerant to produce warmed nitrogen gas.
#19. A method according to #18, wherein said imported nitrogen gas is cooled by indirect heat exchange against said liquid first refrigerant(s) and/or said second refrigerant and/or said tail gas, to form said cooled nitrogen gas.
#20. A method according to #18 or #19, wherein the imported nitrogen gas is cooled to a temperature in the range from -40°C to 10°C.
#21. A method according to any of #18 to #20, wherein the cooled nitrogen gas is expanded to a pressure from 1 bar to 4 bar.
#22. A method according to any of #18 to #21, wherein a portion of the carbon dioxide liquid(s) is removed from the CPU as a liquid product and optionally pumped and warmed to ambient temperature.
#23. A method according to any of #18 to #22, wherein said cooled nitrogen gas is expanded in a first expander, warmed and then further expanded in a second expander. #24. A method according to any of #1 to #16, comprising importing said second refrigerant into the CPU and using said second refrigerant directly to provide said second part of the refrigeration duty.
#25. A method according to any of #1 to #16, comprising:
   separating compressed air feed by cryogenic distillation in an ASU to produce nitrogen gas under pressure and gaseous oxygen;
   expanding at least a portion of said nitrogen gas in the ASU to produce expanded nitrogen gas;
   importing said expanded nitrogen gas into the CPU; and
   using said expanded nitrogen gas as said second refrigerant to produce warmed nitrogen gas.
#26. A method according to #25, comprising:
   removing water and carbon dioxide from compressed air in a purification unit having at least one sorbent bed to produce said compressed air feed for the ASU; and
   regenerating said sorbent bed(s) using at least a portion of said warmed nitrogen gas.
#27. A method according to any of #1 to #13 wherein the second refrigerant is a liquid.
#28. A method according to any of #1 to #13, wherein the second refrigerant is carbon dioxide liquid.
#29. A method according to any of #1 to #13, wherein the second refrigerant is at least a portion of said carbon dioxide liquid(s).
#30. A method according to any of #1 to 13, wherein said CPU comprises two phase separators, said method comprising:
   cooling and condensing carbon dioxide gas in the crude carbon dioxide gas;
   separating the condensed carbon dioxide gas from said non-condensable gas contaminant(s) in a first phase separator to produce a first carbon dioxide liquid and a first overhead vapour comprising said non-condensable gas contaminant(s);
   dividing said first carbon dioxide liquid into three portions;
   pumping a first portion of said first carbon dioxide liquid to produce a pumped first portion;
   reducing the pressure of a second portion of said first carbon dioxide liquid to produce a reduced pressure second portion;
   pumping a third portion of said first carbon dioxide liquid to produce a pumped third portion, and cooling the pumped third portion to produce a cooled third portion;
   cooling and condensing carbon dioxide gas in said first overhead vapour;
   separating the condensed carbon dioxide gas from said non-condensable gas contaminant(s) in a second phase separator to produce a second carbon dioxide liquid and said tail gas comprising said non-condensable gas contaminant(s);
   warming said tail gas by indirect heat exchange to produce warmed tail gas; and
   reducing the pressure of said second carbon dioxide liquid after optionally warming said liquid, to produce reduced pressure second carbon dioxide liquid,
   wherein the liquid first refrigerant(s) providing the first part of the refrigeration duty are the pumped first portion of first carbon dioxide liquid, the reduced pressure second portion of first carbon dioxide liquid and the reduced pressure second carbon dioxide liquid, and wherein the second refrigerant is the cooled third portion of the first carbon dioxide liquid. #31. A method according to #30, wherein the pumped third portion of the first carbon dioxide liquid is cooled by indirect heat exchange against expanded nitrogen gas in an integrated ASU.
#32. A method according to any of #1 to #31, wherein the CPU is integrated with an oxyfuel combustion unit producing a net flue gas that is compressed and dried to produce said crude carbon dioxide gas.
#33. A method according to #32, wherein oxygen for the oxyfuel combustion unit is supplied from an ASU integrated with the CPU.
#34. A method according to any of #1 to #33, wherein at least a portion of the carbon dioxide liquid(s) is removed from the CPU and stored as a liquid.
#35. A method according to any of #1 to #34, wherein at least a portion of the carbon dioxide liquid(s) is removed from the CPU, pumped and optionally heated to ambient temperature.
#36. A method for generating power, said method comprising:
   combusting a fuel selected from the group consisting of carbonaceous fuels, hydrocarbonaceous fuels and biomass, in an oxygen-rich atmosphere within an oxyfuel combustion unit to produce heat and flue gas;
   recovering at least a portion of said heat to generate said power;
   dividing said flue gas after optionally desulfurizing said flue gas, into recycle flue gas and net flue gas;
   recycling said recycle flue gas to the oxyfuel combustion unit;
   compressing and drying said net flue gas to produce dry flue gas under elevated pressure containing at least one non-condensable contaminant;
   feeding said dry flue gas to a CPU wherein carbon dioxide gas from said dry flue gas is cooled and condensed, and separated from said non-condensable gas contaminant(s) to produce at least one carbon dioxide liquid and a tail gas comprising said non-condensable gas contaminants;
   separating compressed air by cryogenic distillation in an ASU to produce nitrogen gas under elevated pressure and gaseous oxygen;
   feeding at least a portion of said gaseous oxygen to said oxyfuel combustion unit;
   feeding at least a portion of said nitrogen gas to the CPU wherein the nitrogen gas is cooled by indirect heat exchange to produce cooled nitrogen gas which is then expanded to produce expanded nitrogen gas;
      wherein the method in the CPU requires refrigeration duty, said refrigeration duty being provided in at least a first part by indirect heat exchange against at least a portion of said carbon dioxide liquid(s) thereby evaporating said liquid(s), and a second part by indirect heat exchange against sensible heat energy alone of said expanded nitrogen gas.
#37. A method according to #36, wherein the imported nitrogen gas is cooled to a temperature in the range from -40°C to 10°C.
#38. A method according to #36 or #37, wherein the cooled nitrogen gas is expanded to a pressure in the range from 1 bar to 4 bar.
#39. A method according to any of #36 to #38, wherein a portion of the carbon dioxide liquid(s) is removed from the CPU as a liquid product and optionally pumped and warmed to ambient temperature.
#40. A method according to any of #36 to #39, wherein said cooled nitrogen gas is expanded in a first expander, warmed and then further expanded in a second expander to produce said expanded nitrogen gas.
#41. A method for generating power, said method comprising:
   combusting a fuel selected from the group consisting of carbonaceous fuels, hydrocarbonaceous fuels and biomass, in an oxygen-rich atmosphere within an oxyfuel combustion unit to produce heat and flue gas;
   recovering at least a portion of said heat to generate said power;
   dividing said flue gas after optionally desulfurizing said flue gas, into recycle flue gas and net flue gas;
   recycling said recycle flue gas to the oxyfuel combustion unit;
   compressing and drying said net flue gas to produce dry flue gas under elevated pressure containing at least one non-condensable contaminant;
   feeding said dry flue gas to a CPU wherein carbon dioxide gas from said dry flue gas is cooled and condensed, and separated from said non-condensable gas contaminant(s) to produce at least one carbon dioxide liquid and a tail gas comprising said non-condensable gas contaminants;
   separating compressed air by cryogenic distillation in an ASU to produce nitrogen gas under elevated pressure and gaseous oxygen;
   feeding at least a portion of said gaseous oxygen to said oxyfuel combustion unit;
   expanding in the ASU at least a portion of said nitrogen gas to produce expanded nitrogen gas; and
   feeding said expanded nitrogen gas to said CPU;
   wherein the method in the CPU requires refrigeration duty, said refrigeration duty being provided in at least a first part by indirect heat exchange against at least a portion of said carbon dioxide liquid(s) thereby evaporating said liquid(s), and a second part by indirect heat exchange against sensible heat energy alone of said expanded nitrogen gas.
#42. A method for generating power, said method comprising:
   combusting a fuel selected from the group consisting of carbonaceous fuels, hydrocarbonaceous fuels and biomass, in an oxygen-rich atmosphere within an oxyfuel combustion unit to produce heat and flue gas;
   recovering at least a portion of said heat to generate said power;
   dividing said flue gas after optionally desulfurizing said flue gas, into recycle flue gas and net flue gas;
   recycling said recycle flue gas to the oxyfuel combustion unit;
   compressing and drying said net flue gas to produce dry flue gas under elevated pressure containing at least one non-condensable contaminant;
   feeding said dry flue gas to a CPU for purification, said purification comprising:
      cooling and condensing carbon dioxide gas in the dry flue gas;
      separating the condensed carbon dioxide gas from said non-condensable gas contaminant(s) in a first phase separator to produce a first carbon dioxide liquid and a first overhead vapour comprising said non-condensable gas contaminant(s);
      dividing said first carbon dioxide liquid into three portions;
      pumping a first portion of said first carbon dioxide liquid to produce a pumped first portion;
      reducing the pressure of a second portion of said first carbon dioxide liquid to produce a reduced pressure second portion;
      pumping a third portion of said first carbon dioxide liquid to produce a pumped third portion, and cooling the pumped third portion to produce a cooled third portion;
      cooling and condensing carbon dioxide gas in said first overhead vapour;
      separating the condensed carbon dioxide gas from said non-condensable gas contaminant(s) in a second phase separator to produce a second carbon dioxide liquid and said tail gas comprising said non-condensable gas contaminant(s);
      warming said tail gas by indirect heat exchange to produce warmed tail gas; and
      reducing the pressure of said second carbon dioxide liquid after optionally warming said liquid, to produce reduced pressure second carbon dioxide liquid,
   separating compressed air by cryogenic distillation in an ASU to produce nitrogen gas under elevated pressure and gaseous oxygen;
   feeding at least a portion of said gaseous oxygen to said oxyfuel combustion unit; and
   expanding at least a portion of said nitrogen gas to produce expanded nitrogen gas;
   wherein the method in the CPU requires refrigeration duty, said refrigeration duty being provided in at least a first part by indirect heat exchange with the pumped first portion of first carbon dioxide liquid, the reduced pressure second portion of first carbon dioxide liquid and the reduced pressure second carbon dioxide liquid, and a second part by indirect heat exchange with sensible heat energy alone of the cooled third portion of the first carbon dioxide liquid.
#43. A method according to #42, wherein the pumped third portion of the first carbon dioxide liquid is cooled by indirect heat exchange against said expanded nitrogen gas.

### COMPARATIVE EXAMPLE 1

Computer simulations using the ASPEN™ Plus software (version 7.2; © Aspen Technology, Inc.) have been carried out to calculate key heat and mass balance and power consumption data for both CPU and ASU depicted in Figure 1. The simulations were based on an oxyfuel coal fired power station with a nominal net electrical output of 500 MW.

As indicated in Table 1, the total ASU and CPU power consumption for these arrangements is 134400 kW.

**TABLE 1**

| CPU line No. | | 108 | 110 | 122 | 124 | 130 | 140 | 150 | 152 | 160 |
|---|---|---|---|---|---|---|---|---|---|---|
| Temperature | °C | 20.0 | -31.5 | 18.5 | -53.5 | 18.5 | 18.5 | 20.0 | 19.9 | 18.5 |
| Pressure | Bar (MPa) | 30.0 (3) | 29.9 (3) | 17.6 (1.8) | 29.8 (3) | 29.7 (3) | 7.9 (0.8) | 110.0 (11) | 110.0 (11) | 110.0 (11) |
| Molar Flow | kmol/s | 4.058 | 4.058 | 2.015 | 1.915 | 1.180 | 0.735 | 2.751 | 2.879 | 0.128 |
| Vapour Fraction | | 1.0 | 0.5 | 1.0 | 0.6 | 1.0 | 1.0 | 0.0 | 0.0 | 0.0 |
| Mole fraction (CO₂) | | 0.760 | 0.760 | 0.970 | 0.524 | 0.253 | 0.959 | 0.967 | 0.967 | 0.970 |
| Mole fraction (O₂) | | 0.063 | 0.063 | 0.009 | 0.123 | 0.193 | 0.011 | 0.009 | 0.009 | 0.009 |
| Mole fraction (N₂) | | 0.153 | 0.153 | 0.018 | 0.304 | 0.478 | 0.025 | 0.020 | 0.020 | 0.018 |
| Mole fraction (Ar) | | 0.025 | 0.025 | 0.003 | 0.048 | 0.076 | 0.005 | 0.004 | 0.004 | 0.003 |
| ASU line No. | | 200 | 1008 | 1044 | 1116 | 1132 | | | | |
| Temperature | °C | 5.1 | 10.0 | 10.0 | 5.1 | 5.1 | | | | |
| Pressure | Bar (MPa) | 2.1 (0.2) | 2.6 (0.3) | 4.4 (0.4) | 1.1 (0.1) | 1.1 (0.1) | | | | |
| Molar Flow | kmol/s | 0.000 | 18.391 | 8.822 | 14.442 | 3.949 | | | | |
| Vapour Fraction | | 1 | 1 | 1 | 1 | 1 | | | | |
| Mole fraction (O₂) | | 0.016 | 0.210 | 0.210 | 0.007 | 0.950 | | | | |
| Mole fraction (N₂) | | 0.980 | 0.781 | 0.781 | 0.989 | 0.020 | | | | |
| Mole fraction (Ar) | | 0.004 | 0.009 | 0.009 | 0.004 | 0.030 | | | | |
| CPU power | | | | 63300 | kW | | | | | |
| ASU Power | | | | 71100 | kW | | | | | |
| Total ASU+CPU power | | | | 134400 | kW | | | | | |

### COMPARATIVE EXAMPLE 2

Similar computer simulations have been carried out to calculate key heat and mass balance and power consumption data for the unintegrated system depicted in Figure 2a. The simulations were again based on an oxyfuel coal fired power station with a nominal net output of 500 MW.

As indicated in Table 2, the total ASU and CPU power consumption for this arrangement is 137150 kW which represents a 2% increase in total consumption over the prior art process of Figure 1. This comparative example demonstrates that the reverse Brayton refrigeration cycle is less efficient than the reverse Rankine cycle in which all the refrigeration is provided by evaporating carbon dioxide.

**TABLE 2**

| CPU Line No. | | 108 | 110 | 122 | 124 | 130 | 140 | 150 | 152 | 160 | 200 | 202 | 208 |
|---|---|---|---|---|---|---|---|---|---|---|---|---|---|
| Temperature | °C | 20.0 | -37.1 | 11.7 | -53.5 | 11.7 | 11.7 | 20.0 | 18.2 | 11.7 | 6.8 | -20.5 | 11.7 |
| Pressure | Bar (MPa) | 30.0(3) | 29.9(3) | 18.4 (2) | 29.8(3) | 29.7(3) | 13.1 (1) | 110.0 (11) | 110.0 (11) | 110.0 (11) | 2.6(0.3) | 2.5 (0.3) | 1.0(0.1) |
| Molar Flow | kmol/s | 4.1 | 4.1 | 1.8 | 1.6 | 1.2 | 0.4 | 2.3 | 2.9 | 0.6 | 4.5 | 4.5 | 4.5 |
| Vapour Fraction | | 1.0 | 0.4 | 1.0 | 0.7 | 1.0 | 1.0 | 0.0 | 0.0 | 0.0 | 1.0 | 1.0 | 1.0 |
| Mol. fraction (CO₂) | | 0.760 | 0.760 | 0.966 | 0.442 | 0.253 | 0.959 | 0.965 | 0.965 | 0.966 | 0.000 | 0.000 | 0.000 |
| Mole fraction (O₂) | | 0.063 | 0.063 | 0.010 | 0.145 | 0.193 | 0.011 | 0.010 | 0.010 | 0.010 | 0.012 | 0.012 | 0.012 |
| Mole fraction (N₂) | | 0.153 | 0.153 | 0.021 | 0.357 | 0.478 | 0.025 | 0.021 | 0.021 | 0.021 | 0.983 | 0.983 | 0.983 |
| Mole fraction (Ar) | | 0.025 | 0.025 | 0.004 | 0.057 | 0.075 | 0.005 | 0.004 | 0.004 | 0.004 | 0.004 | 0.004 | 0.004 |
| ASU Line No. | | 200 | 1008 | 1044 | 1116 | 1132 | | | | | | | |
| Temperature | °C | 5.1 | 10.0 | 10.0 | 5.1 | 5.1 | | | | | | | |
| Pressure | Bar (MPa) | 2.1 | 2.6 | 4.4 | 1.1 | 1.1 | | | | | | | |
| Molar Flow | kmol/s | 0.0000 | 18.3911 | 8.8224 | 14.4419 | 3.9492 | | | | | | | |
| Vapour Fraction | | 1 | 1 | 1 | 1 | 1 | | | | | | | |
| Mole fraction (O₂) | | 0.016 | 0.210 | 0.210 | 0.007 | 0.950 | | | | | | | |
| Mole fraction (N₂) | | 0.980 | 0.781 | 0.781 | 0.989 | 0.020 | | | | | | | |
| Mole fraction (Ar) | | 0.004 | 0.009 | 0.009 | 0.004 | 0.030 | | | | | | | |
| CO₂ compressor and pump power | | | | 58380 | kW | | | | | | | | |
| Nitrogen compressor power | | | | 13370 | kW | | | | | | | | |
| Nitrogen expander power | | | | -5700 | kW | | | | | | | | |
| Total CPU power | | | | 66050 | kW | | | | | | | | |
| ASU Power | | | | 71100 | kW | | | | | | | | |
| Total ASU+CPU power | | | | 137150 | kW | | | | | | | | |

### EXAMPLE 1

Similar computer simulations have been carried out to calculate key heat and mass balance and power consumption data for the integrated system depicted in Figure 2b. The simulations were again based on an oxyfuel coal fired power station with a nominal net output of 500 MW.

As indicated in Table 3, the total ASU and CPU power consumption for this arrangement is 132540 kW which represents a significant reduction of 1.4% in total consumption over the prior art process of Figure 1. This example demonstrates that efficiency of the ASU process is increased by withdrawing pressurised nitrogen from the ASU, and this more than offsets the lower efficiency of the refrigeration system in the CPU.

**TABLE 3**

| CPU line No. | | 108 | 110 | 122 | 124 | 130 | 140 | 150 | 152 | 160 | 200 | 202 | 208 |
|---|---|---|---|---|---|---|---|---|---|---|---|---|---|
| Temperature | °C | 20.0 | -37.1 | 11.7 | -53.5 | 11.7 | 11.7 | 20.0 | 18.2 | 11.7 | 6.8 | -20.5 | 11.7 |
| Pressure | Bar (MPa) | 30.0(3) | 29.9(3) | 18.4 (2) | 29.8(3) | 29.7(3) | 13.1 (1) | 110.0 (11) | 110.0 (11) | 110.0 (11) | 2.6(0.3) | 2.5 (0.3) | 1.0(0.1) |
| Molar Flow | kmol/s | 4.058 | 4.058 | 1.834 | 1.598 | 1.171 | 0.427 | 2.261 | 2.887 | 0.626 | 4.493 | 4.493 | 4.493 |
| Vapour Fraction | | 1.00 | 0.39 | 1.00 | 0.73 | 1.00 | 1.00 | 0.00 | 0.00 | 0.00 | 1.00 | 1.00 | 1.00 |
| Mole fraction | | 0.760 | 0.760 | 0.966 | 0.442 | 0.253 | 0.959 | 0.965 | 0.965 | 0.966 | 0.000 | 0.000 | 0.000 |
| (CO₂) | | | | | | | | | | | | | |
| Mole fraction (O₂) | | 0.063 | 0.063 | 0.010 | 0.145 | 0.193 | 0.011 | 0.010 | 0.010 | 0.010 | 0.012 | 0.012 | 0.012 |
| Mole fraction (N₂) | | 0.153 | 0.153 | 0.021 | 0.357 | 0.478 | 0.025 | 0.021 | 0.021 | 0.021 | 0.983 | 0.983 | 0.983 |
| Mole fraction (Ar) | | 0.025 | 0.025 | 0.004 | 0.057 | 0.075 | 0.005 | 0.004 | 0.004 | 0.004 | 0.004 | 0.004 | 0.004 |
| ASU line No. | | 200 | 1008 | 1044 | 1116 | 1132 | | | | | | | |
| Temperature | °C | 6.8 | 10.0 | 10.0 | 6.8 | 6.8 | | | | | | | |
| Pressure | Bar (MPa) | 2.7 (0.3) | 3.0 (0.3) | 4.4 (0.4) | 1.1 (0.1) | 1.1(0.1) | | | | | | | |
| Molar Flow | kmol/s | 4.493 | 19.329 | 8.642 | 10.882 | 3.953 | | | | | | | |
| Vapour Fraction | | 1 | 1 | 1 | 1 | 1 | | | | | | | |
| Mole fraction (O₂) | | 0.012 | 0.210 | 0.210 | 0.022 | 0.950 | | | | | | | |
| Mole fraction (N₂) | | 0.983 | 0.781 | 0.781 | 0.973 | 0.023 | | | | | | | |
| Mole fraction (Ar) | | 0.004 | 0.009 | 0.009 | 0.005 | 0.027 | | | | | | | |
| CO₂ compressor and pump power | | | | 58380 | kW | | | | | | | | |
| Nitrogen expander power | | | | -5700 | kW | | | | | | | | |
| Total CPU power | | | | 52680 | | | | | | | | | |
| ASU Power | | | | 79860 | kW | | | | | | | | |
| Total ASU+CPU power | | | | 132540 | kW | | | | | | | | |

It will be appreciated that the invention is not restricted to the details described above with reference to the preferred embodiments but that numerous modifications and variations can be made without departing from the scope of the invention as defined in the following claims.

## Claims

1. A method of purifying crude carbon dioxide gas containing at least one non-condensable gas contaminant, under elevated pressure in a carbon dioxide purification unit ("CPU"), said method comprising:
feeding crude carbon dioxide gas to the CPU;
cooling and condensing carbon dioxide gas from the crude carbon dioxide gas; and
separating condensed carbon dioxide gas from said non-condensable gas contaminant(s) to produce at least one carbon dioxide liquid and a tail gas comprising said non-condensable gas contaminant(s),
wherein the method requires refrigeration duty for cooling and condensing carbon dioxide gas, said refrigeration duty being provided in at least a first part by indirect heat exchange against at least one liquid first refrigerant thereby evaporating said first refrigerant(s), and a second part by indirect heat exchange against sensible heat energy alone of at least one second refrigerant.

2. A method as claimed in Claim 1, wherein at least a portion of said first part of the refrigeration duty is provided by at least one of said carbon dioxide liquid(s) as said liquid first refrigerant(s).

3. A method as claimed in Claim 1 or Claim 2, wherein the second refrigerant has a temperature that is sufficiently low to cool said crude carbon dioxide gas to below the CO₂ dew point temperature, and preferably close to the CO₂ triple point temperature.

4. A method as claimed in any of Claims 1 to 3, wherein the second refrigerant has a temperature that is sufficiently low to cool said crude carbon dioxide gas to a temperature from -56°C to 10°C.

5. A method as claimed in any of the preceding claims, wherein said refrigeration duty has a colder part that both cools and condenses said crude carbon dioxide gas and a warmer part that cools the crude carbon dioxide gas with no condensation, said second refrigerant providing at least a portion of said colder part.

6. A method as claimed in any of the preceding claims, wherein said second refrigerant is used in a quantity that is no more than that sufficient to optimize power consumption.

7. A method as claimed in any of the preceding claims, wherein said second refrigerant provides no more than 30%, preferably no more than 20%, of the refrigeration duty.

8. A method as claimed in any of the preceding claims, wherein said second refrigerant is independent of said crude carbon dioxide gas.

9. A method as claimed in any of the preceding claims, wherein said second refrigerant is imported into the CPU.

10. A method as claimed in any of the preceding claims, wherein said second refrigerant is a gas, preferably nitrogen gas, optionally imported from a cryogenic air separation unit ("ASU") integrated with the CPU.

11. A method as claimed in any of Claims 1 to 7, wherein the second refrigerant is derived from said crude carbon dioxide gas and exported from the CPU for cooling.

12. A method as claimed in any of Claims 1 to 10, wherein the second refrigerant is a liquid, preferably carbon dioxide liquid, such as at least a portion of said carbon dioxide liquid(s).

13. A method as claimed in any of the preceding claims, wherein the CPU is integrated with an oxyfuel combustion unit producing a net flue gas that is compressed and dried to produce said crude carbon dioxide gas.

14. A method as claimed in Claim 13, wherein oxygen for the oxyfuel combustion unit is supplied from an ASU integrated with the CPU.

15. A method as claimed in any of the preceding claims, wherein at least a portion of the carbon dioxide liquid(s) is removed from the CPU and stored as a liquid.

16. A method for generating power, said method comprising:
combusting a fuel selected from the group consisting of carbonaceous fuels, hydrocarbonaceous fuels and biomass, in an oxygen-rich atmosphere within an oxyfuel combustion unit to produce heat and flue gas;
recovering at least a portion of said heat to generate said power;
dividing said flue gas after optionally desulfurizing said flue gas, into recycle flue gas and net flue gas;
recycling said recycle flue gas to the oxyfuel combustion unit;
compressing and drying said net flue gas to produce dry flue gas under elevated pressure containing at least one non-condensable contaminant;
feeding said dry flue gas to a CPU wherein carbon dioxide gas from said dry flue gas is cooled and condensed, and separated from said non-condensable gas contaminant(s) to produce at least one carbon dioxide liquid and a tail gas comprising said non-condensable gas contaminants;
separating compressed air by cryogenic distillation in an ASU to produce nitrogen gas under elevated pressure and gaseous oxygen;
feeding at least a portion of said gaseous oxygen to said oxyfuel combustion unit;
feeding at least a portion of said nitrogen gas to the CPU wherein the nitrogen gas is cooled by indirect heat exchange to produce cooled nitrogen gas which is then expanded to produce expanded nitrogen gas;
wherein the method in the CPU requires refrigeration duty, said refrigeration duty being provided in at least a first part by indirect heat exchange against at least a portion of said carbon dioxide liquid(s) thereby evaporating said liquid(s), and a second part by indirect heat exchange against sensible heat energy alone of said expanded nitrogen gas.

17. A method for generating power, said method comprising:
combusting a fuel selected from the group consisting of carbonaceous fuels, hydrocarbonaceous fuels and biomass, in an oxygen-rich atmosphere within an oxyfuel combustion unit to produce heat and flue gas;
recovering at least a portion of said heat to generate said power;
dividing said flue gas after optionally desulfurizing said flue gas, into recycle flue gas and net flue gas;
recycling said recycle flue gas to the oxyfuel combustion unit;
compressing and drying said net flue gas to produce dry flue gas under elevated pressure containing at least one non-condensable contaminant;
feeding said dry flue gas to a CPU wherein carbon dioxide gas from said dry flue gas is cooled and condensed, and separated from said non-condensable gas contaminant(s) to produce at least one carbon dioxide liquid and a tail gas comprising said non-condensable gas contaminants;
separating compressed air by cryogenic distillation in an ASU to produce nitrogen gas under elevated pressure and gaseous oxygen;
feeding at least a portion of said gaseous oxygen to said oxyfuel combustion unit;
expanding in the ASU at least a portion of said nitrogen gas to produce expanded nitrogen gas; and
feeding said expanded nitrogen gas to said CPU;
wherein the method in the CPU requires refrigeration duty, said refrigeration duty being provided in at least a first part by indirect heat exchange against at least a portion of said carbon dioxide liquid(s) thereby evaporating said liquid(s), and a second part by indirect heat exchange against sensible heat energy alone of said expanded nitrogen gas.

18. A method for generating power, said method comprising:
combusting a fuel selected from the group consisting of carbonaceous fuels, hydrocarbonaceous fuels and biomass, in an oxygen-rich atmosphere within an oxyfuel combustion unit to produce heat and flue gas;
recovering at least a portion of said heat to generate said power;
dividing said flue gas after optionally desulfurizing said flue gas, into recycle flue gas and net flue gas;
recycling said recycle flue gas to the oxyfuel combustion unit;
compressing and drying said net flue gas to produce dry flue gas under elevated pressure containing at least one non-condensable contaminant;
feeding said dry flue gas to a CPU for purification, said purification comprising:
cooling and condensing carbon dioxide gas in the dry flue gas;
separating the condensed carbon dioxide gas from said non-condensable gas contaminant(s) in a first phase separator to produce a first carbon dioxide liquid and a first overhead vapour comprising said non-condensable gas contaminant(s);
dividing said first carbon dioxide liquid into three portions;
pumping a first portion of said first carbon dioxide liquid to produce a pumped first portion;
reducing the pressure of a second portion of said first carbon dioxide liquid to produce a reduced pressure second portion;
pumping a third portion of said first carbon dioxide liquid to produce a pumped third portion, and cooling the pumped third portion to produce a cooled third portion;
cooling and condensing carbon dioxide gas in said first overhead vapour;
separating the condensed carbon dioxide gas from said non-condensable gas contaminant(s) in a second phase separator to produce a second carbon dioxide liquid and said tail gas comprising said non-condensable gas contaminant(s);
warming said tail gas by indirect heat exchange to produce warmed tail gas; and
reducing the pressure of said second carbon dioxide liquid after optionally warming said liquid, to produce reduced pressure second carbon dioxide liquid,
separating compressed air by cryogenic distillation in an ASU to produce nitrogen gas under elevated pressure and gaseous oxygen;
feeding at least a portion of said gaseous oxygen to said oxyfuel combustion unit; and
expanding at least a portion of said nitrogen gas to produce expanded nitrogen gas;
wherein the method in the CPU requires refrigeration duty, said refrigeration duty being provided in at least a first part by indirect heat exchange with the pumped first portion of first carbon dioxide liquid, the reduced pressure second portion of first carbon dioxide liquid and the reduced pressure second carbon dioxide liquid, and a second part by indirect heat exchange with sensible heat energy alone of the cooled third portion of the first carbon dioxide liquid.
